Europäisches Patentamt

European Patent Office

Office européen des brevets

(11) Numéro de publication: **0 261 295**
A1

## (12) DEMANDE DE BREVET EUROPEEN

(21) Numéro de dépôt: 86870118.6

(51) Int. Cl.⁴: **H02K 9/06** , H02K 5/24

(22) Date de dépôt: **22.08.86**

(43) Date de publication de la demande:
**30.03.88 Bulletin 88/13**

(84) Etats contractants désignés:
**AT BE CH DE FR GB IT LI LU NL SE**

(71) Demandeur: **ACEC, Société Anonyme**
**Avenue Lloyd George 7**
**B-1050 Bruxelles(BE)**

(72) Inventeur: **Coppin, Roland**
**16, avenue Roi Baudouin**
**B-6419 Marbaix-la-Tour(BE)**

(54) **Moteur électrique autoventilé.**

(57) Moteur électrique autoventilé comportant une enceinte formée par une carcasse et des plateaux de fermeture, ainsi qu'un arbre sur lequel est calé un ventilateur entraîné en rotation à la vitesse d'un rotor porté par cet arbre.

Suivant l'invention, le ventilateur (14) est calé sur un prolongement de l'arbre susdit (1), à l'extérieur de l'enceinte précitée (7). Le ventilateur (14) est monté dans une chambre (19) qui est contiguë à l'enceinte précitée (7) et communique avec celle-ci, cette chambre (19) présentant des parois (22,23) garnies de moyens d'atténuation du bruit (24).

FIG. 2

## MOTEUR ELECTRIQUE AUTOVENTILE

Le présente invention est relative à un moteur électrique autoventilé comportant une enceinte formée par une carcasse et des plateaux de fermeture, ainsi qu'un arbre sur lequel est calé un ventilateur entraîné en rotation à la vitesse d'un rotor porté par cet arbre.

Elle concerne, en particulier, un moteur électrique destiné à tourner à des vitesses élevées et convenant pour être utilisé notamment comme moteur embarqué dans des véhicules, tels que des tramways, trolleybus, engins de levage, ponts roulants, etc.

On connaît des moteurs électriques autoventilés, dans lesquels un ventilateur est monté à l'intérieur de l'enceinte précitée, ce ventilateur assurant le refroidissement du moteur par aspiration d'air extérieur dans l'enceinte précitée et refoulement de cet air vers l'extérieur de celle-ci, par des ouvertures ménagées dans la carcasse, le ventilateur étant calé sur l'arbre du moteur d'un côté du rotor, au voisinage d'un des plateaux de fermeture.

Lorsque de tels moteurs autoventilés connus doivent tourner à des vitesses variables, comme, par exemple, dans le cas de moteurs de propulsion pour des engins roulants, leur ventilateur doit être dimensionné pour assurer un bon refroidissement à une vitesse dite de régime thermique qui est largement inférieure à la vitesse maximale de rotation du moteur. Il s'ensuit qu'aux vitesses de rotation élevées de ces moteurs, le bruit émis par la rotation du ventilateur dépasse les normes imposées.

De plus, le montage du ventilateur dans la carcasse même des moteurs autoventilés connus exige l'emploi d'un arbre relativement long pour recevoir le ventilateur. Cette disposition augmente la distance entre les roulements et engendre une flèche plus importante qui influence fortement la vitesse critique. Pour compenser une flèche trop importante, il faut accroître le diamètre de l'arbre, ce qui entraîne ainsi l'accroissement du diamètre des roulements et réduit d'autant la vitesse de rotation maximum de l'arbre pour permettre une lubrification à la graisse.

La présente invention vise à remédier aux inconvénients des moteurs autoventilés connus du type décrit cidessus.

Elle a pour objet un moteur électrique autoventilé du type décrit dans le premier paragraphe du présent mémoire, qui présente de nombreux avantages, comme montré dans la suite du présent mémoire.

Le moteur électrique du type indiqué dans le premier paragraphe du présent mémoire est essentiellement caractérisé en ce que le ventilateur est calé sur un prolongement de l'arbre susdit, à l'extérieur de l'enceinte précitée, ce moteur étant, de préférence, muni de moyens d'atténuation du bruit.

Dans une forme de réalisation particulière du moteur suivant l'invention, le ventilateur est monté dans une chambre qui est contiguë à l'enceinte précitée et communique avec celle-ci, cette chambre présentant des parois garnies de moyens d'atténuation du bruit.

La chambre dans laquelle est monté le ventilateur communique avec l'enceinte du moteur, de préférence par une ouverture annulaire ménagée dans le plateau de fermeture séparant la chambre de l'enceinte, cette ouverture annulaire étant avantageusement coaxiale à l'axe du moteur.

Les moyens d'atténuation du bruit sont, de préférence, constitués par des couches tapissant les parois internes de la chambre précitée.

D'autres particularités et détails de l'invention ressortiront de la description suivante, dans laquelle il est fait référence aux dessins ci-annexés, dans lesquels :

-la figure 1 est une coupe transversale montrant une moitié d'un moteur autoventilé de type connu,

-la figure 2 est une vue semblable à celle de la figure 1, montrant une forme de réalisation d'un moteur suivant l'invention, et

-figure 3 est, à plus grande échelle, une coupe partielle d'une partie de la chambre dans laquelle est monté le ventilateur.

Dans ces différentes figures, les mêmes notations de référence désignent des éléments identiques ou similaires.

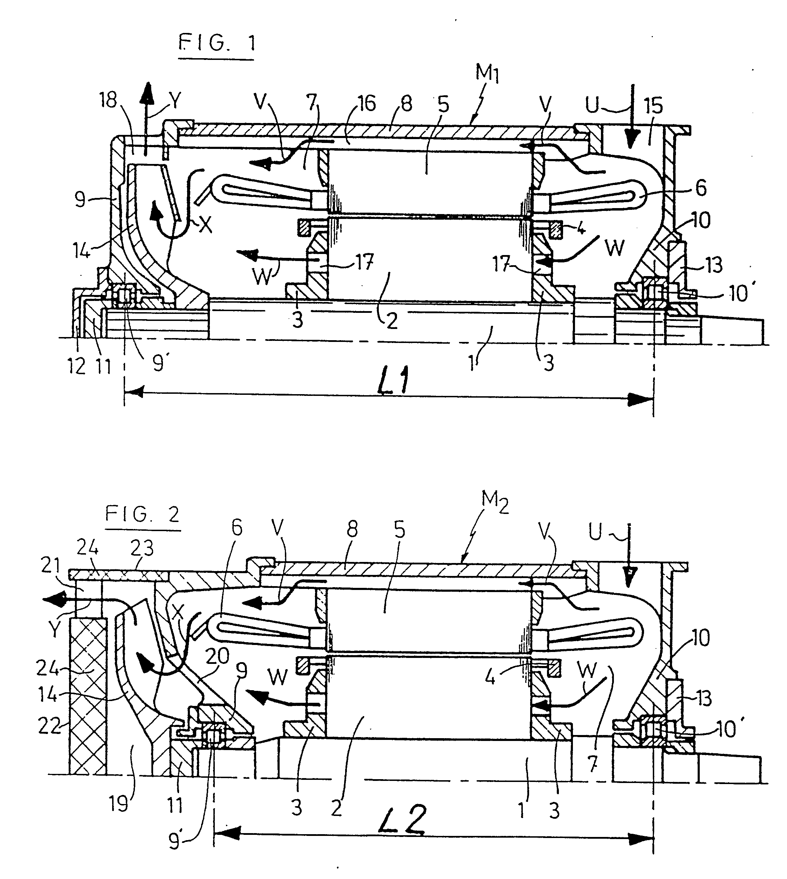

Le moteur électrique connu représenté à la figure 1 et désigné dans son ensemble par la notation M1 comporte un arbre 1 sur lequel est monté un rotor 2 maintenu en place par des plateaux de serrage 3 et muni d'une cage 4. Autour du rotor 2 se trouve la masse d'un stator 5 comportant des bobinages dont les têtes sont montrées en 6.

Le rotor 2 et le stator 5 se trouvent dans une enceinte 7 délimitée par une carcasse 8 et par des plateaux de fermeture 9, 10. Aux extrémités de l'arbre 1 sont montés des roulements 9' et 10'. Au plateau de fermeture 9 sont fixées une plaque 11 formant butée pour l'arbre 1 et un couvercle 12, tandis qu'une plaque de fermeture 13 est fixée au plateau de fermeture 10.

Entre le rotor 2 et le plateau de fermeture 9, l'arbre 1 du moteur porte un ventilateur à pales 14 qui est ainsi monté à l'intérieur de l'enceinte 7. Le ventilateur 14 qui est calé sur l'arbre 1 tourne à la même vitesse que celui-ci. Il aspire de l'air de refroidissement entrant dans l'enceinte 7 par une ouverture radiale 15 (flèche U) ménagée dans la carcasse 8, cet air balayant le rotor 2 et le stator 5, en passant par des passages 16 et 17, comme indiqué par les flèches V et W. Les pales du ventilateur 14 expulsent l'air chauffé dans l'enceinte 7 par une ouverture de sortie radiale 18 également ménagée dans la carcasse 8, comme indiqué par les flèches X et Y.

Le moteur représenté à la figure 2 et désigné dans son ensemble par la notation M2 est un moteur autoventilé suivant l'invention. Dans ce moteur M2, le ventilateur 14, au lieu d'être monté sur l'arbre 1 dans l'enceinte 7, est calé sur un prolongement de cet arbre 1 à l'extérieur de l'enceinte 7.

Dans la forme de réalisation du moteur suivant l'invention, illustrée à titre d'exemple à la figure 2, le ventilateur 14 s'étend dans une chambre 19 communiquant avec l'intérieur de l'enceinte 7 par une ouverture annulaire 20 ménagée dans le plateau de fermeture 9. L'air qui a balayé le moteur est aspiré par le ventilateur 14, à travers l'ouverture 20, dans la chambre 19, comme montré par la flèche X et il est expulsé de la chambre 19 par une ouverture annulaire 21 (flèche Y) ménagée dans une paroi radiale 22 de cette chambre 19. Cette dernière est également délimitée par une paroi cylindrique 23 coaxiale à l'axe de l'arbre 1 du moteur. L'ouverture annulaire 21 d'expulsion de l'air de balayage est également coaxiale à l'arbre du moteur. Comme on le voit à la figure 2, les ouvertures 20 et 21 sont toutes deux axiales, mais elles sont décalées l'une par rapport à l'autre en direction radiale.

Les parois 22 et 23 sont garnies d'une couche 24 d'une matière atténuant le bruit qui peut être, par exemple, une couche de laine de verre ou de mousse de latex ou de polyuréthane à pores ouverts ou fermés.

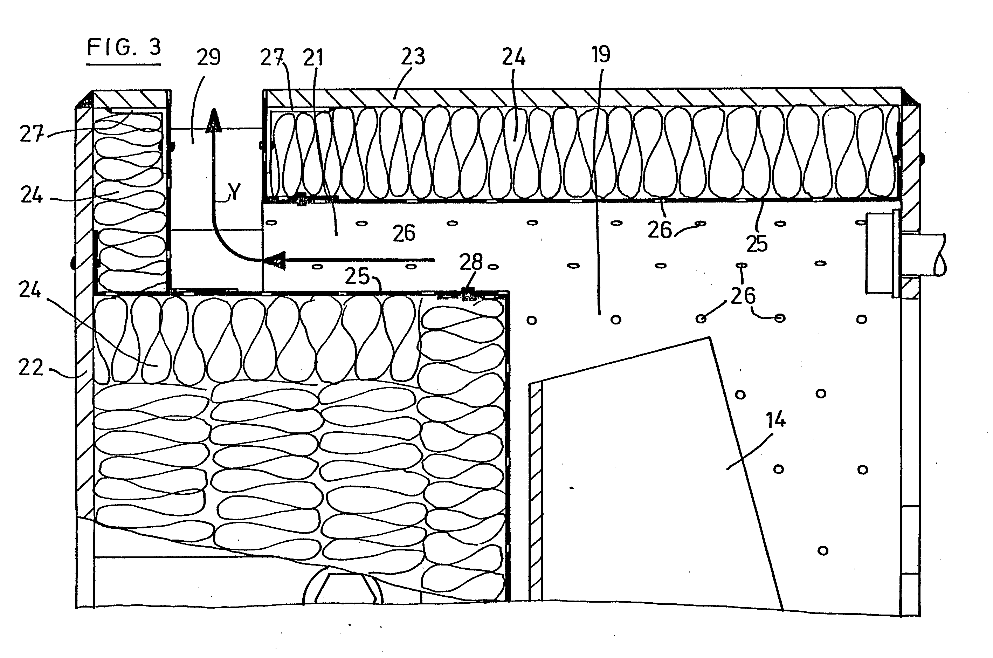

La figure 3 montre une partie de la chambre 19. On voit que les couches 24 de matière absorbant les sons sont maintenues contre les parois 22 et 23 de la chambre par des tôles 25 présentant de multiples perforations 26, ces tôles étant fixées aux parois 22 et 23 de la chambre 19, par exemple au moyen de cornières 27 et de boulons ou rivets 28. A la figure 3, l'ouverture annulaire 21 se prolonge par une partie radiale 29 de sortie de l'air de ventilation.

Le montage du ventilateur 14 à l'extérieur de l'enceinte 7 du moteur, associé aux moyens d'atténuation du bruit ou silencieux (couches 24), conformément à la présente invention, offre de nombreux avantages.

Tout d'abord, l'invention permet, en optimisant le système ventilateur et silencieux, d'atteindre des vitesses périphériques très élevées du ventilateur 14, tout en respectant les niveaux de bruits imposés.

L'invention permet, en effet, d'optimiser les dimensions du ventilateur 14, notamment les diamètres intérieur et extérieur de ses pales, ces dimensions n'étant plus limitées, d'une part, par la carcasse 8 du moteur ni, d'autre part, par les dimensions du rotor 2.

Dans ce moteur suivant l'invention, la sortie de l'air peut s'effectuer par l'ouverture annulaire 21 sur pratiquement toute la périphérie du ventilateur 14, ce qui, dans les moteurs autoventilés connus, est impossible, puisqu'il faut donner au plateau de fermeture 9 une raideur suffisante pour empêcher le roulement 9' de vibrer; ceci a pour effet de réduire fortement le passage de l'air.

Grâce au fait que le ventilateur 14 se trouve à l'extérieur du moteur dans une chambre 19 distincte de son enceinte 7, il est possible de prévoir dans cette chambre un atténuateur de bruit ou silencieux à la fois simple et efficace, dont les matériaux (laine de verre ou mousse) peuvent être choisis en fonction des spectres de fréquences et des niveaux de bruit.

Comparé au moteur connu représenté à la figure 1, le moteur suivant l'invention montré à la figure 2 présente une distance entre plateaux de fermeture L2 inférieure à celle (L1) du moteur connu, de sorte que les diamètres de l'arbre 1 et des roulements des plateaux de fermeture 9, 10 peuvent être diminués ou que des vitesses de rotation plus élevées du moteur sont admises.

Le raccourcissement de la distance entre plateaux de fermeture (L2<L1) et une ventilation meilleure du moteur suivant l'invention permettent d'en réduire le poids.

Comparé au moteur autoventilé connu selon la figure 1, le moteur suivant l'invention, représenté à la figure 2, offre les avantages suivants :
-réduction de 40 % de la distance entre roulements,
-augmentation spectaculaire de la vitesse critique qui est pratiquement doublée pour un même diamètre de l'arbre.

Lors de la fabrication de moteurs électriques à vitesse de rotation élevée, comme le moteur suivant la présente invention, on se trouve confronté à la difficulté de choisir un arbre dont le diamètre est à la fois suffisamment grand pour obtenir une vitesse critique élevée et suffisamment petit pour permettre la lubrification des roulements notamment au moyen de graisse.

La présente invention permet d'atteindre ce double objectif, tout en respectant le niveau de bruit admis.

Pour un moteur de type connu, l'augmentation du diamètre de l'arbre permet de réduire la flèche et d'augmenter la vitesse critique. Mais cette progression de la dimension diamétrale est rapidement contrariée par la difficulté d'assurer la lubrification des roulements à la graisse. L'utilisation obligatoire de l'huile comme lubrifiant de ces roulements nécessite l'installation d'un circuit supplémentaire de lubrification, coûteux, encombrant et réclamant une maintenance attentive.

Pour obtenir le même niveau de bruit à la même vitesse de rotation que celui avec un moteur réalisé selon l'invention, il faudrait ajouter au moteur conventionnel un atténuateur de bruit périphérique qui augmenterait considérablement son encombrement.

**Revendications**

1. Moteur électrique autoventilé comportant une enceinte formée par une carcasse et des plateaux de fermeture, ainsi qu'un arbre sur lequel est calé un ventilateur entraîné en rotation à la vitesse d'un rotor porté par cet arbre, caractérisé en ce que le ventilateur (14) est calé sur un prolongement de l'arbre susdit (1), à l'extérieur de l'enceinte précitée (7).

2. Moteur suivant la revendication 1, caractérisé en ce qu'il est muni de moyens d'atténuation du bruit (24).

3. Moteur suivant les revendications précédentes, caractérisé en ce que le ventilateur (14) est monté dans une chambre (19) qui est contiguë à l'enceinte précitée (7) et communique avec celle-ci, cette chambre (19) présentant des parois (22,23) garnies de moyens d'atténuation du bruit (24).

4. Moteur suivant la revendication 3, caractérisé en ce que la chambre (19) dans laquelle est monté le ventilateur (14) communique avec l'enceinte (7) du moteur par une ouverture annulaire (20) ménagée dans le plateau de fermeture (9) séparant l'enceinte (7) de la chambre (19).

5. Moteur suivant l'une quelconque des revendications 3 et 4, caractérisé en ce que la chambre susdite (19) présente des parois radiale et périphérique (22,29,23) garnies chacune de moyens d'atténuation du bruit (24).

6. Moteur suivant la revendication 5, caractérisé en ce que la paroi radiale (22) présente au moins une ouverture annulaire (21) pour évacuer l'air dans une direction sensiblement parallèle à l'axe de l'arbre (1) du moteur.

7. Moteur suivant l'une quelconque des revendications 3 à 6, caractérisé en ce que les moyens d'atténuation du bruit (24) sont constitués par des couches d'une matière acoustiquement absorbante garnissant les parois extérieures (22,23) de la chambre précitée (19).

8. Moteur suivant l'une quelconque des revendications 4 à 6, caractérisé en ce que l'ouverture annulaire (20) de communication entre l'enceinte (7) du moteur et la chambre (19) contenant le ventilateur (14) et l'ouverture annulaire (23,29) servant à évacuer l'air de cette chambre (19) sont décalées en direction radiale.

FIG. 1

FIG. 2

FIG. 3

0 261 295

## RAPPORT DE RECHERCHE EUROPEENNE

Office européen des brevets

Numéro de la demande

EP 86 87 0118

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 147 501 (LICENTIA) * page 3, ligne 7 - page 4, ligne 15; figures 1, 2 * | 1-8 | H 02 K 9/06 H 02 K 5/24 |
| X | FR-A- 834 964 (BBC) * page 1, ligne 54 - page 2, ligne 48; figures 1, 2 * | 1,4,6, 8 | |
| X | FR-A- 684 372 (ASSOCIATED ELECTRICAL INDUSTRIES LTD.) * page 4, ligne 44 - page 5, ligne 2; figures 1, 2 * | 1,4,6, 8 | |
| X | PATENT ABSTRACTS OF JAPAN, vol. 8, no. 285 (E-287)[1722], 26 décembre 1984; & JP - A - 59 149 756 (TOSHIBA K.K.) 27-08-1984 | 1 | |

DOMAINES TECHNIQUES RECHERCHES (Int. Cl.4)

H 02 K 9/00

Le présent rapport de recherche a été établi pour toutes les revendications

| Lieu de la recherche | Date d'achèvement de la recherche | Examinateur |
|---|---|---|
| BERLIN | 20-03-1987 | WEIHS J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82